(19) **Europäisches Patentamt / European Patent Office / Office européen des brevets**

(11) **EP 2 277 016 B1**

(12) **FASCICULE DE BREVET EUROPEEN**

(45) Date de publication et mention
de la délivrance du brevet:
**11.09.2013 Bulletin 2013/37**

(21) Numéro de dépôt: **09761904.3**

(22) Date de dépôt: **15.05.2009**

(51) Int Cl.:
*G01F 1/708* (2006.01)          *G01F 1/74* (2006.01)
*G01N 15/08* (2006.01)          *G01F 1/704* (2006.01)

(86) Numéro de dépôt international:
**PCT/FR2009/050910**

(87) Numéro de publication internationale:
**WO 2009/150353 (17.12.2009 Gazette 2009/51)**

(54) **PROCÉDÉ ET INSTALLATION DE DÉTERMINATION D'UNE VALEUR DE DÉBIT D'UN FLUIDE**

VERFAHREN UND EINRICHTUNG ZUR BESTIMMUNG EINER DURCHFLUSSMESSGRÖSSE EINES FLUIDES

VERFAHREN UND EINRICHTUNG ZUR BESTIMMUNG EINER DURCHFLUSSMESSGRÖSSE EINES FLUIDES

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **16.05.2008 FR 0853175**

(43) Date de publication de la demande:
**26.01.2011 Bulletin 2011/04**

(73) Titulaire: **Rhodia Opérations**
**93306 Aubervilliers (FR)**

(72) Inventeurs:
• **CLERICO, Thomas**
**F-33170 Gradignan (FR)**
• **GUIRARDEL, Matthieu**
**F-33800 Bordeaux (FR)**

(74) Mandataire: **Grand, Guillaume et al**
**Cabinet Lavoix**
**62, rue de Bonnel**
**69448 Lyon Cedex 03 (FR)**

(56) Documents cités:
**US-A- 4 203 317          US-A- 4 210 809**
**US-A1- 2005 126 278**

• **WOLFFENBUTTEL B M A ET AL: "Novel method for non-intrusive measurement of velocity and slug length in two- and three-phase slug flow in capillaries; Non-intrusive measurement of velocity and slug length in slug flow in capillaries" MEASUREMENT SCIENCE AND TECHNOLOGY, IOP, BRISTOL, GB, vol. 13, no. 10, 1 octobre 2002 (2002-10-01), pages 1540-1544, XP020063618 ISSN: 0957-0233**

EP 2 277 016 B1

**Description**

La présente invention concerne un procédé de détermination du débit d'un fluide, ainsi qu'une installation pour la mise en oeuvre de ce procédé.

US- A- 4 210 809 fournit un exemple d'un procédé du type défini par le préambule de la revendication 1 annexée.

Le procédé de détermination conforme à l'invention permet d'accéder à de nombreux types d'informations, relatives aux écoulements de liquides ou de gaz. Ce procédé de détermination permet notamment de déduire des informations relatives au transport d'un solvant au travers des parois d'une enceinte.

L'invention se propose en particulier d'étudier la perméabilité des récipients, dans lesquels sont reçus des hydrocarbures. A cet égard, il est à souligner que le stockage et le transport de ces derniers posent des problèmes, qui sont précisément liés à la perméabilité des polymères thermoplastiques, utilisés pour la fabrication des structures de stockage et de transport.

Dans le cas particulier des réservoirs à essence des véhicules automobiles, la quantité de vapeur d'hydrocarbures émise vers l'extérieur, du fait de la perméabilité des parois des réservoirs, est soumise à des normes de plus en plus sévères. Dans ces conditions, cette perméabilité doit être mesurée de la façon la plus précise possible, à partir de la variation de volume de l'hydrocarbure initialement stocké.

A cet effet, il est tout d'abord connu de mettre en oeuvre des mesures de type gravimétrique. Le fluide dont on désire connaître la variation de volume est tout d'abord stocké dans son enceinte de réception. Puis, on suit en fonction du temps la perte de masse de l'ensemble formé par le contenant et son contenu. Etant donné que la masse du contenant est supposée invariante, on détermine la variation de masse du fluide, ce qui permet de déduire la fraction de fluide qui s'est évaporée hors du récipient.

A titre d'alternative, il est également connu de réaliser des mesures dites d'émission. Du fluide est envoyé dans un tube de polymère, dont on se propose de tester les caractéristiques de perméabilité. L'ensemble est alors placé dans un volume fermé, permettant de récupérer les vapeurs ayant traversé les parois du tube. Ces vapeurs sont ensuite dirigées vers une cellule, contenant du charbon actif qui absorbe certains composants. En suivant l'évolution de la masse de ces charbons actifs, il est alors possible de déduire la valeur de perméabilité du tube.

Ces différents procédés connus impliquent cependant certains inconvénients. En effet, ils présentent une sensibilité relativement faible. De plus, il ne sont pas susceptible de traduire, de manière satisfaisant, la réalité des phénomènes physico-chimiques étudiés.

Ceci étant précisé, l'invention vise à remédier à ces différents inconvénients.

A cet effet, elle a pour objet un procédé de détermination d'au moins une valeur de débit d'au moins un fluide, tel que défini à la revendication 1.

D'autres caractéristiques de l'invention sont spécifiées aux revendications dépendantes 2 à 12.

L'invention va être décrite ci-après, en référence aux dessins annexés donnés uniquement à titre d'exemples non limitatifs, dans lesquels :

- les figures 1 et 2 sont des vues de face, illustrant de manière schématique deux étapes successives de mise en oeuvre d'un procédé de détermination du débit d'un fluide, conforme à l'invention ;
- la figure 3 est une graphe, illustrant la variation de volume d'un fluide en fonction du temps, déterminée conformément à l'invention ;
- la figure 4 est un graphe, analogue à la figure 3, illustrant la mise en oeuvre de l'art antérieur ; et
- la figure 5 est une vue en perspective, illustrant une variante de réalisation d'une installation de mise en oeuvre du procédé conforme à l'invention.

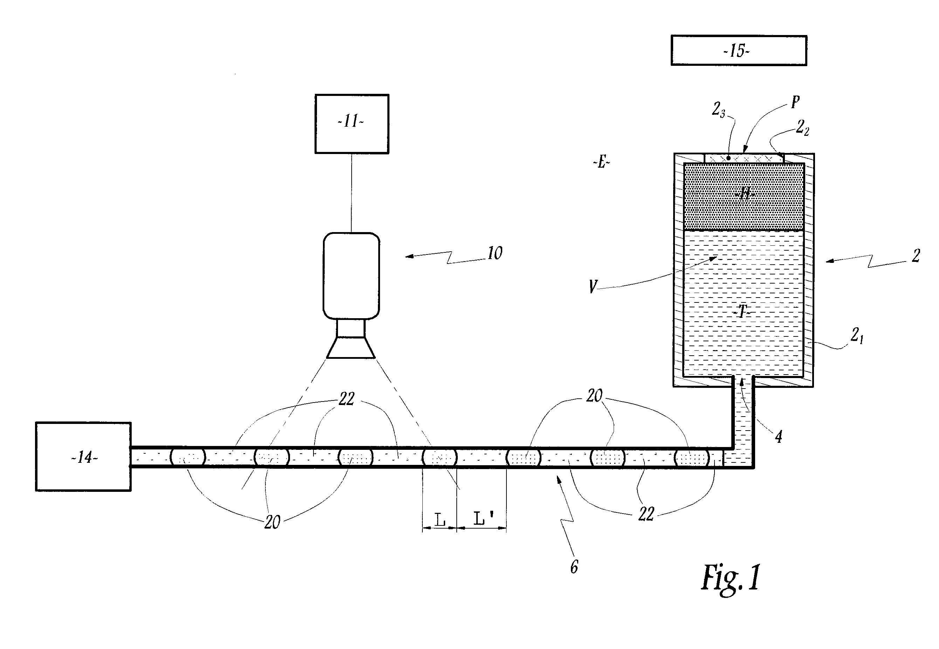

Comme le montre la figure 1, l'installation de détermination d'un débit de fluide, conforme à l'invention, comprend un organe d'écoulement 6, par exemple réalisé sous forme d'un tube souple, notamment en PTFE. Ce tube 6 est avantageusement translucide, en particulier transparent, afin de coopérer avec un système de prise de vues, qui est en l'occurrence une caméra 10. Cette caméra, qui est dirigée vers ce tube d'écoulement 6, est associée à des moyens informatiques 11, permettant le traitement des données générées par cette caméra.

De façon avantageuse, la section intérieure de l'organe d'écoulement 6 est comprise entre $10^{-4}$ mm$^2$ et 1 mm$^2$, de préférence entre $10^{-3}$ et $10^{-1}$ mm$^2$. Cette section intérieure fait référence à une dimension, qui exclut les parois de l'organe d'écoulement 6.

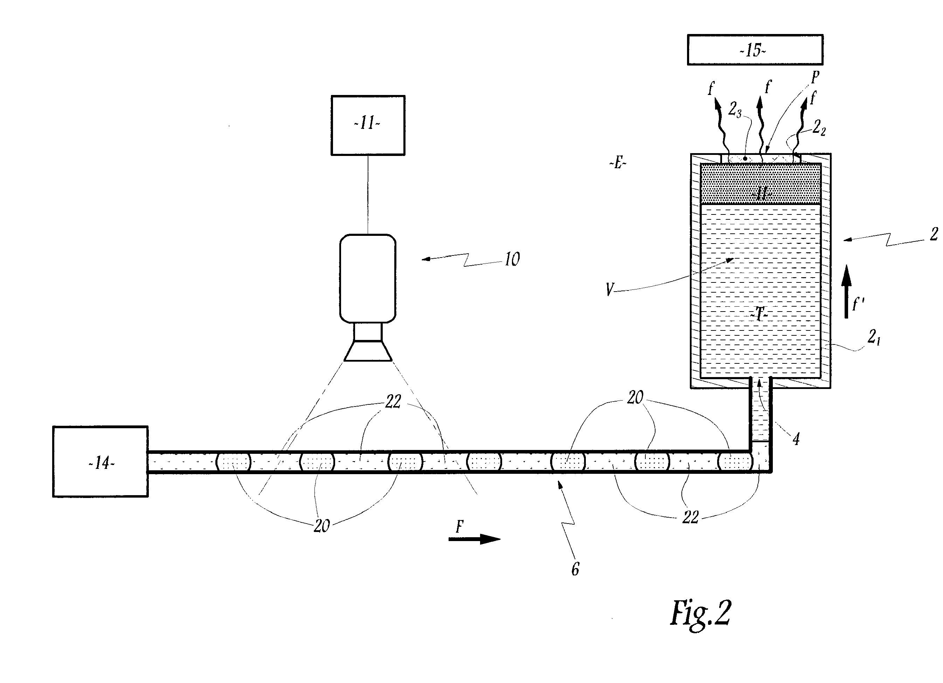

En aval, à savoir à droite sur les figures 1 et 2, l'organe d'écoulement 6 débouche dans une enceinte 2, qui peut être réalisée de manière monobloc, ou bien être formée de plusieurs éléments différents. Dans l'exemple illustré, l'enceinte 2 comprend un corps $2_1$, réalisé en un matériau non perméable tel qu'un métal. Ce corps $2_1$ délimite une fenêtre $2_2$, dans laquelle peut être reçu un insert $2_3$, réalisé en un matériau dont on désire mesurer par exemple la perméabilité.

Ce mode de réalisation est avantageux dans la mesure où on peut faire appel à un unique corps $2_1$, puis rapporter plusieurs inserts successifs, qui sont réalisés dans les différents matériaux qu'on désire tester. On note V le volume intérieur de l'enceinte 2, P les parois de l'insert $2_3$, ainsi que E l'air ambiant extérieur. Enfin, l'étanchéité entre l'entrée 4 de l'enceinte 2, et le tube 6, est assurée par tous moyens appropriés.

Il est en outre prévu un organe de régulation de pression, destiné à compenser les pertes de charge à l'intérieur du tube 6 et de l'enceinte 2. Cet organe 14, qui est de type connu en soi, est placé en amont du tube 6.

Enfin, il est prévu un appareil d'analyse 15, disposé au voisinage de l'insert $2_3$. Cet appareil 15, qui est par exemple un chromatographe en phase gazeuse, permet d'analyser la phase gazeuse s'échappant hors de l'enceinte 2, comme on le verra plus en détail dans ce qui suit.

La mise en oeuvre du procédé conforme à l'invention, au moyen de l'installation décrite ci-dessus, va maintenant être explicitée.

Dans le présent exemple, on suppose qu'on désire déterminer la perméabilité des parois P de l'insert $2_3$, à l'égard d'un fluide qui est par exemple un hydrocarbure H. A cet effet, il s'agit tout d'abord de remplir au moins une partie du volume intérieur V de l'enceinte, au moyen de cet hydrocarbure. Dans l'exemple illustré, on introduit cet hydrocarbure uniquement dans la partie supérieure de l'enceinte, à savoir au voisinage de l'insert $2_3$.

De plus, la partie inférieure de cette enceinte est occupée par un fluide tampon T, de sorte que l'ensemble du volume intérieur de l'enceinte est occupé par du fluide. On notera en outre que l'utilisation du fluide tampon T est avantageuse, dans la mesure où ceci permet d'éviter, d'une part, les fuites d'hydrocarbure en direction du tube 6 et, d'autre part, le mélange entre l'hydrocarbure étudié et le fluide s'écoulant dans le tube 6, comme on le verra dans ce qui suit.

On forme ensuite, de façon connue en soi, une suite de bouchons 20 dans des tronçons 22 de phase porteuse. Au sens de l'invention, des bouchons sont des phases fluides, voire solides s'écoulant le long du tube 6, en occupant substantiellement la largeur de ce dernier. Ces bouchons sont séparés les uns des autres par un fluide porteur, qui n'est pas miscible avec le fluide constitutif des bouchons.

Ces bouchons peuvent être formés, de manière connue en soi, dans des moyens de génération de structure classique, qui sont distincts du tube 6. Puis, lorsque ces bouchons sont formés, ils sont injectés dans le tube 6, par tout moyen approprié. A titre de variante, ces bouchons peuvent être formés directement dans le tube 6, par toute procédure classique appropriée.

On retrouve alors, dans le tube 6, une succession alternée de bouchons et de tronçons de phase porteuse, qui peut être assimilée à chapelet continu de bouchons. Ces bouchons 20 et ces tronçons 22 forment un fluide d'écoulement, au sens de l'invention, dont on peut déterminer le débit à l'intérieur du tube, selon les étapes qui vont être décrites ci-après.

Au sein du chapelet évoqué ci-dessus, on peut utiliser des bouchons de même nature ou bien présentant des natures différentes. A titre d'exemple, ces bouchons sont par exemple des gouttes formées par un mélange d'eau colorée et de glycérol, alors que la phase porteuse est par exemple formée par une huile de silicone.

De façon avantageuse, la distinction entre ces gouttes et ces tronçons de phase porteuse est opérée par la caméra 10, notamment par contraste. Ainsi, les gouttes ou la phase porteuse peuvent être sombres, alors que la phase porteuse ou les gouttes peuvent être claires, de sorte que les volumes respectifs des gouttes et des tronçons sont visibles. On peut également prévoir que les gouttes et les tronçons sont transparents, leur interface restant cependant visible par la caméra.

On note L la longueur des différentes gouttes, ainsi que L' la longueur des différents tronçons intermédiaires. De façon avantageuse, ces longueurs L et L' sont inférieures à la valeur du champ de la caméra, notamment inférieures à 5 cm, typiquement comprises entre 0,1 et 1 mm. On notera en outre que, dans l'exemple illustré, les différentes gouttes présentent la même longueur L, alors que les différents tronçons présentent la même longueur L'. Cependant, on peut prévoir que les gouttes et/ou les tronçons présentent des longueurs différentes entre elles/eux.

On suppose que les conditions opératoires sont telles, que l'enceinte 2 ne se dilate pas et que la masse volumique de l'hydrocarbure est invariante. On suppose en outre qu'une fraction de l'hydrocarbure quitte le volume intérieur V de l'enceinte, dans lequel elle était initialement stockée, pour pénétrer dans les parois P, voire vers l'extérieur E.

Dans ces conditions, du fait de la présence de l'organe de régulation de pression 14, la sortie de cette fraction d'hydrocarbure H, matérialisée par les flèches f, induit une remontée du fluide tampon T dans l'enceinte 2, matérialisée par la flèche f, ainsi qu'un déplacement du chapelet de bouchons 20 selon la flèche F. Ces différents écoulements de fluide sont illustrés sur la figure 2, la valeur des déplacements évoqués ci-dessus étant exagérée, dans un but de clarté.

On notera que l'utilisation du fluide tampon T permet d'éviter que les bouchons 20 ne pénètrent dans le volume intérieur V, lorsque ce fluide tampon occupe une partie du tube 6 comme cela est illustré sur cette figure 2. Ceci est avantageux, dans la mesure où ces bouchons peuvent alors être réutilisés aisément, en vue d'une procédure suivante.

Conformément à l'invention, on mesure la vitesse de déplacement des bouchons 20 à l'intérieur du tube 6, grâce à la caméra 10 associée aux moyens de traitement informatique 11. Connaissant par ailleurs la section de ce tube, on peut en déduire le volume de fluide d'écoulement, formé par les bouchons 20 et les tronçons 22, déplacé par unité de temps à l'intérieur de ce tube. Cette valeur correspond à la variation de volume d'hydrocarbure, à l'intérieur de l'enceinte 2.

De façon plus précise, on utilise l'équation suivante :

$$Q = V.S.F, \text{ où}$$

Q correspond à la variation de volume par unité de temps (en $mm^3/s$)
V correspond au déplacement des bouchons en pixels par unité de temps, mesuré par la caméra (en pixel/s).

S correspond à la section intérieure du canal (en $mm^2$) et

F est le grandissement de la caméra (en mm/pixel) à savoir la correspondance entre le nombre de pixels et la distance.

Dans cette première phase, on a déterminé des valeurs instantanées de débit. Dans une phase postérieure, on peut également réaliser l'intégrale de cette variation, ce qui permet d'obtenir une courbe illustrant la variation du volume, en fonction du temps.

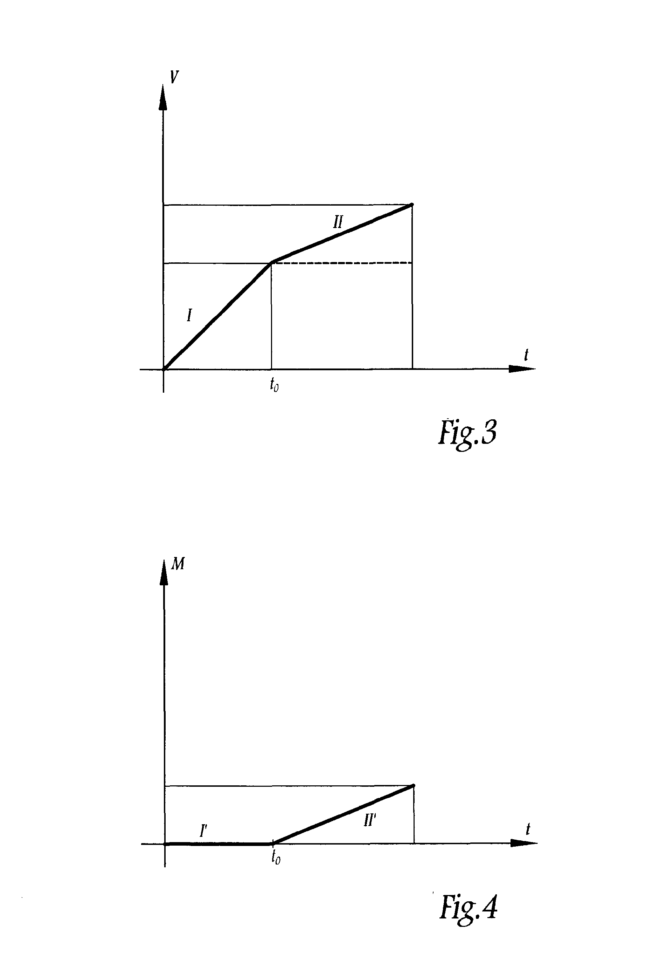

La figure 3 illustre la variation, en fonction du temps t, du volume V du fluide d'écoulement, formé par les bouchons 20 et les tronçons 22, qui s'est déplacé dans le tube 6 afin de compenser la sortie de l'hydrocarbure H. On note que ces courbes se décomposent tout d'abord en une première zone de type transitoire, notée 1, présentant une pente relativement importante, ainsi qu'une seconde zone II de type permanent, de pente plus faible.

La zone I correspond à la phase initiale d'échappement d'hydrocarbure, hors du volume intérieur V, à savoir celle pour laquelle cet hydrocarbure diffuse et se stabilise dans l'épaisseur des parois P de l'insert $2_3$. Cette zone I est représentative de l'avancée du front de propagation de l'hydrocarbure, à l'intérieur des parois P.

Puis, la zone II est relative à une phase postérieure, au cours de laquelle l'hydrocarbure migre en direction de l'extérieur E. Cette zone II correspond à un régime permanent, pour lequel la diffusion et la solubilité de l'hydrocarbure s'équilibrent, ce qui définit ainsi la perméabilité du matériau à l'égard de l'hydrocarbure.

Cette figure 3 permet donc d'accéder à des informations relatives au transport de l'hydrocarbure, au travers de l'insert $2_3$. Ce terme générique de transport comprend, d'une part, le transfert de cet hydrocarbure vers l'intérieur des parois, matérialisé par la zone I est, d'autre part, la perméabilité proprement dite de ces parois à l'égard de l'hydrocarbure, qui est matérialisée par la zone II.

A cet égard, on notera que la courbe de la figure 3 peut présenter une zone II sensiblement horizontale, comme illustré en traits pointillés. Ceci signifie que, dans ce cas, il y a uniquement transfert de l'hydrocarbure vers les parois P. En revanche, cet hydrocarbure ne diffuse pas en direction de l'air ambiant.

A titre de variante, on peut prévoir que le solvant étudié est formé par un mélange de différents composants. Dans ce cas, l'appareil 15 permet d'effectuer au moins une analyse de la fraction gazeuse évacuée hors de l'enceinte 2, via l'insert $2_3$. De manière avantageuse, une telle analyse permet d'identifier si l'un ou l'autre des composants de ce solvant a tendance à s'échapper avant ou après le ou les autre(s) composant(s).

La figure 3 met en exergue un avantage de l'invention, à savoir le fait qu'elle permet d'accéder à davantage d'informations, que dans l'art antérieur. A cet égard, la figure 4 illustre une courbe, obtenue par la mise en oeuvre de mesures gravimétriques conformément à l'état de la technique. On rappellera que ce procédé permet d'étudier uniquement la perte de masse de l'ensemble, formé par le contenant et le contenu.

Dans ces conditions, cette figure 4 illustre la variation en fonction du temps, non pas du volume V comme dans le cas de l'invention, mais de la masse M. La courbe correspondante comprend une zone I', confondue avec l'axe des abscisses, puis une zone II', de même pente que celle II de la figure 3. On notera également que la transition entre, d'une part, les zones I est II et, d'autre part, les zones I' et II', s'opère de part et d'autre d'un même temps de transition, noté $t_0$. Comme cela apparaît clairement sur la figure 4, la phase de diffusion de l'hydrocarbure dans l'épaisseur de l'insert $2_3$ n'est pas identifiée dans l'art antérieur, puisque ce phénomène n'induit aucune perte de masse de l'ensemble, formé par le contenant et le contenu.

On notera en outre qu'on peut mettre en oeuvre un procédé de criblage de différents matériaux, à partir de l'installation des figures 1 et 2. A cet effet, après avoir identifié les propriétés de perméabilité du matériau constitutif du premier insert $2_3$, selon les étapes ci-dessus, on le remplace par un autre insert, réalisé en un matériau différent, dont on désire identifier les propriétés. Il est alors possible de tester un grand nombre de matériaux, de manière commode, en plaçant successivement différents inserts au niveau de la fenêtre $2_2$. Au terme de cette phase de criblage, on identifie un ou plusieurs matériaux préférés, présentant des propriétés de perméabilité intéressantes.

L'invention n'est pas limitée aux exemples décrits et représentés.

Ainsi, on peut prévoir de réaliser l'organe d'écoulement, non pas sous forme d'un tube isolé, mais sous forme d'un canal ménagé dans une plaquette. Ce canal est alors réalisé selon les procédures classiques de l'état de la technique, qui sont notamment décrites dans « D.C. Duffy, JC MacDonald, Olivier J.A. Schueller, Gorges M. Whitesides, Anal. Chem., 70, p 4974- 4984, 1998 ». L'extrémité aval du canal débouche alors à l'entrée de l'enceinte 2, par l'intermédiaire de tout moyen approprié.

Dans l'exemple illustré, on a mesuré un débit, lié à la sortie d'un fluide, hors du volume intérieur de l'enceinte. On peut également mesurer, conformément à l'invention, un débit lié à une arrivée de fluide dans ce volume intérieur. Dans ce cas, ce phénomène induit un déplacement des bouchons 20 et des tronçons 22, non plus sur la droite comme sur la figure 2, mais sur la gauche. De façon similaire, on mesure la vitesse de déplacement des bouchons, ce qui permet d'accéder aux informations relatives à l'augmentation du volume de fluide dans l'enceinte.

Dans ce qui précède, on a mesuré un débit de fluide, afin d'en déduire des informations relatives à la perméabilité de l'enceinte. Cependant, il est également possible de mettre en oeuvre un procédé afin d'accéder à des informations relatives à la dilatation de l'enceinte.

Dans ce cas, on fait varier les conditions opératoires, en particulier la température et/ou la pression et/ou l'humidité, de manière à obtenir une modification de la valeur du volume intérieur de l'enceinte. En supposant que le fluide initialement admis dans cette enceinte présente une masse volumique constante, la dilatation de l'enceinte conduit à une arrivée de bouchons 20 en direction de son volume intérieur, puisque le volume du fluide est invariant. La mesure du débit de ces bouchons, ainsi mis en mouvement, permet d'accéder à la valeur correspondante de dilatation de l'enceinte.

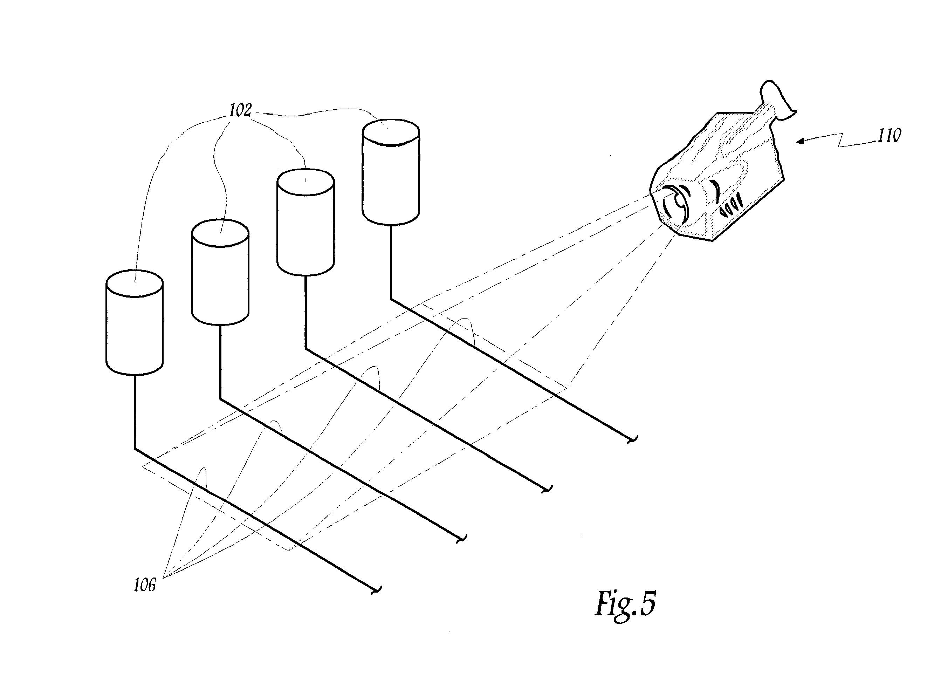

Enfin, dans l'exemple illustré ci-dessus, la caméra 10 est associée à un unique tube d'écoulement 6. Cependant, on peut prévoir qu'une même caméra 110 peut visualiser le déplacement de bouchons à l'intérieur de plusieurs tubes d'écoulement 106, eux-mêmes en communication avec plusieurs enceintes 102, comme cela est illustré à la figure 5. En d'autres termes, une unique caméra permet de mettre en oeuvre, de manière simultanée, plusieurs mesures de variation de volume.

L'invention permet d'atteindre les objectifs précédemment mentionnés.

En effet, l'invention permet de déterminer, de manière simple et économique, la variation de volume d'un fluide. De plus, cette mise en oeuvre peut se faire de façon automatique, ainsi que de manière continue.

De plus, le procédé conforme à l'invention est d'une grande sensibilité, car l'utilisation d'un organe d'écoulement de section réduite permet de détecter de très faibles valeurs de débit, pouvant être inférieures à un nanolitre par heure. Enfin, comme illustré à la figure 3, l'invention permet d'accéder à de nombreuses informations, en particulier relatives à la phase transitoire d'échappement d'un fluide hors d'une enceinte.

Dans ce qui suit, on présente un exemple de mise en oeuvre de l'invention, à titre purement indicatif.

On utilise une enceinte 2, dont le corps $2_1$ est réalisé en acier inoxydable. On obture la fenêtre $2_2$ de cette enceinte 2 au moyen d'un insert $2_3$, réalisé en polyamide. Le volume intérieur de l'enceinte 2 est de 2 ml. On remplit l'ensemble de cette enceinte, exception faite des zones de raccord, au moyen d'un alcool, auquel le polyamide est perméable.

On raccorde à cette enceinte un tube d'écoulement 6, réalisé en PFA. Ce tube présente une longueur de 2 mètres, ainsi qu'un diamètre intérieur de 250 micromètres. Il est associé à un régulateur de pression électropneumatique 14, conforme à celui commercialisé par la société SMC sous la référence ITV0010.

On génère des gouttes formées par un mélange d'eau, de glycérol et d'un colorant, qui sont séparées par une succession de tronçons de phase porteuse formée d'une huile silicone. Les longueurs respectives L et L', de chaque goutte et de chaque tronçon, sont voisines de 0,5 mm.

On utilise par ailleurs une caméra 10 de type SONY XACD 70, qu'on dirige vers un tronçon rectiligne du tube 6. On mesure ensuite la variation de volume du fluide, à l'intérieur de l'enceinte, en maintenant les conditions opératoires à une température de 40°C et à une pres sion de 300 mbar.

En utilisant le procédé décrit ci-dessus, on accède aux zones I est II de la figure 2. On constate que, au bout de 1 heure, 0,2 ml de fluide ont diffusé, depuis le volume intérieur en direction des parois de l'enceinte. Puis, après cette phase initiale, ce fluide migre vers l'extérieur, ce qui correspond à la zone II de la figure 2. Au bout de 24 heures, la variation totale de volume mesurée est de 1 ml.

**Revendications**

1. Procédé de détermination d'au moins une valeur de débit d'au moins un fluide, dans lequel on introduit ce fluide, dit d'écoulement, dans un organe d'écoulement (6) mis en communication avec le volume intérieur (V) d'une enceinte (2), sous forme d'une succession de bouchons (20) séparés par des tronçons (22) d'une phase porteuse, on mesure la vitesse de déplacement de ces bouchons dans l'organe d'écoulement, et on en déduit la ou chaque valeur de débit de ce fluide d'écoulement (20, 22), **caractérisé en ce qu'**on introduit un solvant (H) dans au moins une partie du volume intérieur (V) de l'enceinte (2), et on déduit des informations relatives au transport de ce solvant au travers d'au moins une partie ($2_3$) des parois (P) de l'enceinte, à partir de la valeur de débit du fluide d'écoulement (20, 22).

2. Procédé selon la revendication 1, **caractérisé en ce qu'**on utilise une enceinte (2) comprenant un corps ($2_1$), au travers duquel le solvant ne se transporte pas, ainsi qu'un insert ($2_3$), susceptible d'être rapporté, notamment de façon amovible, sur ce corps ($2_2$), cet insert étant réalisé en un matériau au travers duquel le solvant peut se transporter, ce matériau étant notamment perméable au solvant.

3. Procédé selon l'une des revendications 1 ou 2, **caractérisé en ce qu'**on place l'enceinte (2) à une température et à une pression sensiblement constantes.

4. Procédé selon l'une des revendications précédentes, **caractérisé en ce qu'**on déduit, à partir du débit, une variation de volume du fluide d'écoulement en fonction du temps.

5. Procédé selon la revendication 4, **caractérisé en ce qu'**on identifie une zone transitoire (I), correspondant au transfert de matière du solvant vers l'intérieur des parois (P) de ladite partie ($2_3$) de l'enceinte.

6. Procédé selon la revendication 4 ou 5, **caractérisé**

en ce qu'on identifie une zone permanente (II), correspondant à la perméabilité proprement dite de ces parois (P) à l'égard du solvant.

7. Procédé selon l'une des revendications précédentes, **caractérisé en ce qu'**on sépare le solvant (H), par rapport au fluide d'écoulement (20, 22), au moyen d'un fluide tampon (T).

8. Procédé selon l'une des revendications précédentes, **caractérisé en ce que** le solvant (H) est formé par un mélange de composants et on réalise au moins une analyse de la fraction gazeuse, provenant du transport de ce solvant au travers de ladite partie $(2_3)$ des parois (P) de l'enceinte.

9. Procédé selon l'une quelconque des revendications précédentes, **caractérisé en ce qu'**on mesure la vitesse de déplacement des bouchons (20) au moyen d'un système de prise de vues numérique, en particulier d'une caméra (10).

10. Procédé selon la revendication 9, **caractérisé en ce qu'**on utilise plusieurs organes d'écoulement (106), s'étendant au moins partiellement en parallèle les uns par rapport aux autres, on introduit différents fluides d'écoulement dans ces différents organes d'écoulement, et on mesure la vitesse de déplacement des bouchons de chaque fluide d'écoulement au moyen d'un unique système de prise de vues (110).

11. Procédé selon la revendication 9 ou 10, **caractérisé en ce qu'**on déduit la valeur du débit en utilisant l'équation :

Q = V. S. F ; où
Q correspond au débit de fluide;
V correspond à la variation de pixels par unité de temps, associée au système de prise de vues ;
S correspond à la section intérieure de l'organe d'écoulement (6) ; et
F correspond au grandissement du système de prise de vues.

12. Procédé selon l'une des revendications précédentes, **caractérisé en ce que** la section intérieure de l'organe d'écoulement (6) est comprise entre $10^{-4}$ mm$^2$ et 1 mm$^2$, de préférence entre $10^{-3}$ et $10^{-1}$ mm$^2$.

**Patentansprüche**

1. Verfahren zur Ermittlung wenigstens eines Durchflussstromwerts von wenigstens einem Fluid, bei welchem man dieses Fluid, Strömungsfluid genannt, in ein Durchströmungselement (6) einbringt, welches mit dem Innenvolumen (V) eines abgeschlossenen Raums (2) in Verbindung steht und in Form einer Aufeinanderfolge von Stopfen (20), die von Teilstücken (22) eines Trägerstrangs separiert sind, ausgebildet ist, man die Verlagerungsgeschwindigkeit dieser Stopfen in dem Durchströmungselement misst, und man daraus den oder jeden Durchflussstromwert des Strömungsfluids (20, 22) ableitet, **dadurch gekennzeichnet, dass** man ein Lösungsmittel (H) in wenigstens einen Teil des Innenvolumens (V) des abgeschlossenen Raums (2) einbringt und man ausgehend von dem Durchflussstromwert des Strömungsfluids (20, 22) Informationen ableitet bezüglich der Bewegung des Lösungsmittels durch wenigstens einen Teil $(2_3)$ von Wänden (P) des abgeschlossenen Raums hindurch.

2. Verfahren gemäß Anspruch 1, **dadurch gekennzeichnet, dass** man einen abgeschlossenen Raum (2) verwendet, der aufweist einen Körper $(2_1)$, durch welchen hindurch das Lösungsmittel sich nicht bewegt, sowie einen Einsatz $(2_3)$, der geeignet ist an dem Körper $(2_2)$ angebracht zu werden, insbesondere auf lösbare Weise, wobei der Einsatz aus einem Material gemacht ist, durch welches hindurch sich das Lösungsmittel bewegen kann, wobei das Material insbesondere für das Lösungsmittel durchlässig ist.

3. Verfahren gemäß einem der Ansprüche 1 oder 2, **dadurch gekennzeichnet, dass** man den abgeschlossenen Raum (2) auf eine Temperatur und einen Druck einstellt, die im Wesentlichen konstant sind.

4. Verfahren gemäß einem der vorhergehenden Ansprüche, **dadurch gekennzeichnet, dass** man ausgehend von dem Durchflussstrom eine Variation des Volumens des Strömungsfluids in Abhängigkeit von der Zeit ableitet.

5. Verfahren gemäß Anspruch 4, **dadurch gekennzeichnet, dass** man eine Übergangszone (1) identifiziert, die zu dem Lösungsmittelmaterietransfer zu dem Inneren der Wände (P) des besagten Teils $(2_3)$ des abgeschlossenen Raums korrespondiert.

6. Verfahren gemäß Anspruch 4 oder 5, **dadurch gekennzeichnet, dass** man eine Permanentzone (11) identifiziert, die zur eigentlichen Permeabilität dieser Wände (P) bezüglich des Lösungsmittels korrespondiert.

7. Verfahren gemäß einem der vorhergehenden Ansprüche, **dadurch gekennzeichnet, dass** man das Lösungsmittel (H) bezüglich des Strömungsfluids (20, 22) separiert mittels eines Propfenfluids (T).

**8.** Verfahren gemäß einem der vorhergehenden Ansprüche, **dadurch gekennzeichnet, dass** das Lösungsmittel (H) gebildet ist von einer Mischung von Bestandteilen und man wenigstens eine Gasfraktionsanalyse durchführt, die ausgeht von der Bewegung dieses Lösungsmittels durch den besagten Teil ($2_3$) der Wände (P) des abgeschlossenen Raums hindurch.

**9.** Verfahren gemäß einem der vorhergehenden Ansprüche, **dadurch gekennzeichnet, dass** man die Verlagerungsgeschwindigkeit der Stopfen (20) misst mittels eines Digitalbildaufnahmesystems , insbesondere einer Kamera (10).

**10.** Verfahren gemäß Anspruch 9, **dadurch gekennzeichnet, dass** man mehrere Durchströmungselemente (106) verwendet, die sich wenigstens teilweise parallel zueinander erstrecken, man unterschiedliche Strömungsfluide in diese unterschiedlichen Durchströmungselemente einbringt, und man die Verlagerungsgeschwindigkeit der Stopfen jedes Durchströmungsfluids mittels eines einzigen Bildaufnahmesystems (110) misst.

**11.** Verfahren gemäß Anspruch 9 oder 10, **dadurch gekennzeichnet, dass** man den Durchflussstromwert ableitet durch Verwenden der Gleichung:

Q = V.S.F; wobei
Q dem Durchflussstromwert entspricht;
V der Pixelvariation pro Zeiteinheit entspricht, die dem Bildaufnahmesystem zugeordnet ist;
S dem Innenquerschnitt des Durchströmungselement (6) entspricht; und
F der Vergrößerung des Bildaufnahmesystems entspricht.

**12.** Verfahren gemäß einem der vorhergehenden Ansprüche, **dadurch gekennzeichnet, dass** der Innenquerschnitt des Durchströmungselements (6) zwischen $10^{-4}$ mm$^2$ und 1 mm$^2$, bevorzugt zwischen $10^{-3}$ und $10^{-1}$ mm$^2$ beträgt.

**Claims**

**1.** A method for determining at least one flow rate value for at least one fluid, wherein this fluid, called flow fluid, is fed in the form of a succession of plugs (20) separated by segments (22) of a carrier phase into a flow member (6) communicating with the internal volume (V) of a chamber (2), the rate of movement of these plugs in the flow member is measured, and the or each flow rate value of this flow fluid (20, 22) is deduced therefrom, **characterized in that** a solvent (H) is fed into at least a part of the internal volume (V) of the chamber (2), and information relating to the transport of this solvent through at least a part ($2_3$) of the walls (P) of the chamber is deduced from the flow rate value of the flow fluid (20, 22).

**2.** The method as claimed in claim 1, **characterized in that** the chamber (2) that is used comprises a body ($2_1$), through which the solvent is not transported, and an insert ($2_3$), that can be added, notably removably, to this body ($2_2$), this insert being made of a material through which the solvent can be transported, this material being notably permeable to the solvent.

**3.** The method as claimed in either of claims 1 and 2, **characterized in that** the chamber (2) is set to a temperature and a pressure that are substantially constant.

**4.** The method as claimed in one of the preceding claims, **characterized in that** a variation in the volume of the flow fluid as a function of time is deduced from the flow rate.

**5.** The method as claimed in claim 4, **characterized in that** a transitional region (I) is identified that corresponds to the transfer of material from the solvent to the interior of the walls (P) of said part ($2_3$) of the chamber.

**6.** The method as claimed in claim 4 or 5, **characterized in that** a permanent region (II) is identified that corresponds to the actual permeability of these walls (P) facing the solvent.

**7.** The method as claimed in one of the preceding claims, **characterized in that** the solvent (H) is separated from the flow fluid (20, 22) by means of a damping fluid (T).

**8.** The method as claimed in one of the preceding claims, **characterized in that** the solvent (H) is formed by a mixture of components and at least one analysis of the gaseous fraction, originating from the transport of this solvent through said part ($2_3$) of the walls (P) of the chamber, is carried out.

**9.** The method as claimed in any one of the preceding claims, **characterized in that** the rate of movement of the plugs (20) is measured by means of a digital photographic system, in particular a camera (10).

**10.** The method as claimed in claim 9, **characterized in that** a number of flow members (106) are used that extend at least partially parallel to one another, various flow fluids are fed into these various flow members, and the rate of movement of the plugs of each flow fluid is measured by means of a single photographic system (110).

11. The method as claimed in claim 9 or 10, **characterized in that** the flow rate value is deduced by using the equation:

> Q = V. S. F; in which
> Q corresponds to the fluid flow rate;
> V corresponds to the variation of pixels per time unit, associated with the photographic system;
> S corresponds to the internal section of the flow member (6); and
> F corresponds to the enlargement of the photographic system.

12. The method as claimed in one of the preceding claims, **characterized in that** the internal section of the flow member (6) is between $10^{-4}$ mm$^2$ and 1 mm$^2$, preferably between $10^{-3}$ and $10^{-1}$ mm$^2$.

*Fig.1*

*Fig.2*

Fig.3

Fig.4

Fig.5

EP 2 277 016 B1

**EP 2 277 016 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4210809 A

**Littérature non-brevet citée dans la description**

- **D.C. DUFFY ; JC MACDONALD ; OLIVIER J.A. SCHUELLER ; GORGES M. WHITESIDES.** *Anal. Chem.,* 1998, vol. 70, 4974-4984